# DEMANDE DE BREVET EUROPEEN

(11) **EP 2 541 163 A1**
(43) Date de publication de la demande: **02.01.2013**
(21) Numéro de dépôt: 12305766.3
(22) Date de dépôt: 28.06.2012
(51) Int. Cl.: F24J 2/52, F24J 2/04

(54) **Perfectionnement aux installations solaires destinées à être posées sur une partie de la surface d'une structure support en pente**

(30) Priorité: 30.06.2011 FR 1155896
(71) Demandeur: Poujoulat, 79360 Granzay Gript (FR)
(72) Inventeur: PIERRE, Jean-Luc, 79460 MAGNE (FR)
(74) Mandataire: Coralis Harle

(57) **Abrégé**

Cette installation solaire (1) comprend une juxtaposition de panneaux solaires (6) dont le niveau supérieur s'étend dans un plan (P), et qui est délimitée notamment par une bordure longitudinale supérieure (11). Cette installation est destinée à être bordée, au moins le long de ladite bordure longitudinale supérieure (11), par un matériau de recouvrement (12) dont le niveau supérieur s'étend dans un plan (P') sus-jacent audit plant (P), lequel matériau (12) est délimité par une bordure longitudinale (14) en regard de ladite bordure longitudinale (11) desdits panneaux solaires (6). En outre, un espace (E) est prévu entre lesdites bordures longitudinales (11) et (14).

Conformément à l'invention, l'installation comprend un volet déflecteur (18), muni d'une aile déflectrice (18') ménagée entre lesdites bordures longitudinales (11) et (14), dans ledit espace (E), laquelle aile déflectrice (18') s'étend, d'une part, parallèlement ou sensiblement parallèlement auxdites bordures longitudinales (11, 14), et d'autre part, vers le haut, depuis ledit plan (P) ou en-dessous, et au-delà dudit plan (P).

## Description

La présente invention concerne le domaine des installations solaires de type photovoltaïque ou thermique, destinées à être posées sur une partie de la surface d'une structure support en pente.

Les installations solaires sont constituées de panneaux photovoltaïques ou thermiques, chacun en forme de plaque carrée ou rectangulaire, associés à des moyens qui permettent leur montage de manière étanche sur la structure support en pente de réception, en règle générale une toiture de bâtiment.

Très généralement, l'installation comporte une pluralité de panneaux juxtaposés qui couvrent une partie de la surface de la toiture, cette surface de panneaux étant bordée par un matériau de recouvrement (tuiles ou ardoises notamment) qui est posé sur le reste de la toiture.

Par souci esthétique ou pour respecter certaines normes, on cherche à intégrer complètement ces installations solaires dans l'épaisseur de la toiture à la place de son matériau de recouvrement.

Dans ce cas, le plan correspondant au niveau supérieur des panneaux solaires juxtaposés est sous-jacent par rapport au plan correspondant au niveau supérieur du matériau de recouvrement.

II est alors possible que des rafales de vent allant à l'encontre du sens de la pente, s'engouffrent sous ce matériau de recouvrement, au niveau de la bordure longitudinale de ce dernier qui est en regard de la bordure longitudinale supérieure de l'installation solaire, et entre lesquelles bordures longitudinales est généralement prévu un espace, avec les risques qui en découlent, notamment en terme d'infiltrations d'eaux pluviales sous ledit matériau de recouvrement.

Les solutions classiques utilisées pour éviter ces infiltrations consistent à étancher la ou les ouvertures présentes sous le matériau de recouvrement, cela au moyen d'une structure d'étanchéité ou d'une matière appropriée, convenablement rapportée.

Le document WO-2007/034171 décrit un solin d'étanchéité de ce genre, interposé entre le matériau de couverture et le côté latéral d'une structure de fenêtre ou de panneau solaire. Ici le plan général du niveau supérieur de la structure de fenêtre ou de panneau solaire s'étend, au-dessus du plan général correspondant au niveau supérieur du matériau de couverture périphérique.

Mais ces opérations d'étanchement sont généralement longues à mettre en oeuvre et ne sont pas toujours faciles à réaliser.

La présente invention propose une solution technique permettant de remédier à cet inconvénient et donc de limiter les problèmes ou risques d'infiltrations précités sous le matériau de recouvrement en regard de la bordure longitudinale supérieure de l'installation solaire.

Pour cela, l'installation solaire conforme à l'invention comprend un volet déflecteur, ménagé entre la bordure longitudinale supérieure des panneaux solaires et la bordure longitudinale en regard du matériau de recouvrement, lequel volet déflecteur comprend une aile déflectrice qui s'étend, d'une part, parallèlement ou sensiblement parallèlement auxdites bordures longitudinales et, d'autre part, vers le haut, depuis le plan P correspondant au niveau supérieur des panneaux solaires juxtaposés, ou en-dessous, et au-delà de ce plan P.

De préférence, et pour assurer l'intégration complète de l'installation solaire dans la toiture du bâtiment équipé, cette aile déflectrice s'étend au maximum jusqu'au plan P' correspondant au niveau supérieur du matériau de recouvrement.

Selon une forme de réalisation préférée, l'aile déflectrice du volet déflecteur s'étend de manière inclinée, du bas vers le haut, en direction de l'amont de la pente, ceci par rapport à un plan perpendiculaire au plan P correspondant au niveau supérieur des panneaux solaires juxtaposés. L'angle d'inclinaison correspondant a de cette aile déflectrice, par rapport à cette perpendiculaire au plan P est avantageusement compris entre 30 et 60°.

Selon une forme de réalisation préférée, le volet déflecteur est en forme de dièdre comprenant ladite aile déflectrice, associée à une aile embase permettant sa fixation sur un support, par exemple au moyen de vis.

Selon un mode de réalisation particulier, les panneaux solaires de la rangée supérieure de l'installation sont chacun fixés sur une plaque support munie de moyens pour sa solidarisation avec ladite structure support en pente, et ledit volet déflecteur est fixé sur ladite plaque support.

Selon un autre mode de réalisation, les panneaux solaires de la rangée supérieure de l'installation sont chacun bordés par un cadre périphérique constitué d'un profilé aval, de deux profilés latéraux et d'un profilé amont constituant une partie au moins de ladite bordure longitudinale supérieure, et ledit volet déflecteur est fixé sur ledit profilé amont.

Dans le cadre de ce second mode de réalisation, le profilé amont des panneaux solaires comporte avantageusement une gorge longitudinale dans laquelle est encastrée au moins une partie de l'aile embase du volet déflecteur, laquelle aile embase est fixée dans ladite gorge de réception au moyen de vis.

Le volet déflecteur comporte encore avantageusement une ou plusieurs ouvertures, ménagées au moins en partie dans son aile déflectrice, permettant d'accéder à des matériels sous-jacents, par exemple des vis de fixation ou de manoeuvre pour lesdits matériels.

Selon encore une autre particularité, la bordure longitudinale supérieure de l'installation est constituée par la juxtaposition d'une pluralité de panneaux solaires, chacun desdits panneaux solaires étant équipé de son propre volet déflecteur qui s'étend sur toute ou pratiquement toute sa longueur.

L'invention sera encore illustrée, sans être aucunement limitée, par la description suivante d'une forme de réalisation particulière, donnée uniquement à titre d'exemple, et représentée sur les dessins annexés dans lesquels :
- la figure 1 est une vue en perspective illustrant la partie supérieure d'une installation solaire conforme à l'invention, montée sur une toiture équipée de tuiles ;
- la figure 2 est une vue agrandie, en coupe selon le plan de coupe 2-2 de la figure 1 ;
- la figure 3 est une vue isolée du volet déflecteur équipant l'installation solaire illustrée sur les figures 1 et 2 ;
- la figure 4 est une vue en coupe du volet déflecteur, selon le plan de coupe 4-4 de la figure 3.

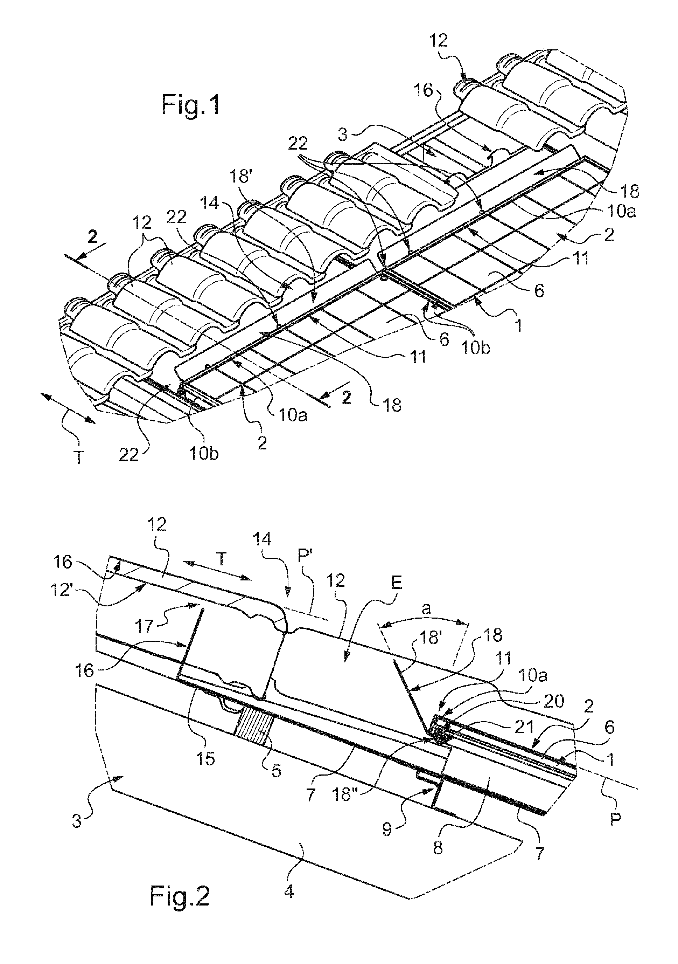

L'installation solaire 1 illustrée sur les figures 1 et 2 comprend une pluralité de modules solaires 2 juxtaposés en lignes et en colonnes.

Cette installation solaire 1 recouvre une partie de la surface d'une structure support en pente 3, en particulier une charpente de toiture comprenant ici, comme visible sur la figure 2, des chevrons parallèles 4 orientés dans le sens de la pente T, associés à des liteaux parallèles 5 disposés horizontalement (c'est-à-dire transversalement au sens de la pente T).

Chaque module solaire 2 comprend un panneau solaire 6, de forme générale carrée ou rectangulaire, monté sur une embase métallique constituée d'une plaque support 7. Chaque panneau solaire 6 est fixé sur sa propre plaque support 7 par tout moyen approprié, par exemple par des profilés rapportés 8.

Les différentes plaques 7 des modules solaires 2 juxtaposés se chevauchent horizontalement et verticalement, cela éventuellement en association avec des plis appropriés, pour obtenir une étanchéité.

Ces plaques supports 7 sont fixées sur la structure support 3 par tout moyen approprié, par exemple par des profilés rapportés 9.

Par convention, on définit ci-après les notions de « supérieur » et de « inférieur », ainsi que de « amont » et « aval », au regard de la pente T de la structure support 3.

Les panneaux solaires 6 comportent chacun une structure d'encadrement constituée d'un profilé amont 10a (par rapport au sens descendant de la pente T), de deux profilés latéraux 10b, et d'un profilé aval (non visible sur les figures).

Le chant d'extrémité des profilés amont 10a de la rangée supérieure de panneaux 6 (au regard du sens de la pente) définit la bordure supérieure 11 de l'installation solaire, cette bordure supérieure 11 s'étendant perpendiculairement au sens de la pente T.

Sur l'ensemble de l'installation solaire 1, le niveau supérieur des panneaux 6 s'étend dans un plan P qui est parallèle au plan de la structure support 3. Ce plan P correspond au plan passant par les faces de dessus de la structure d'encadrement des panneaux solaires 6, et en particulier, passant par la face de dessus des profilés amont 10a de cette structure d'encadrement.

La face de dessus des profilés constitutifs de la structure d'encadrement et en particulier des profilés amont 10a est plane et s'étend ici perpendiculairement ou sensiblement perpendiculairement à leurs chants d'extrémités.

D'autre part, sur le pourtour de l'installation solaire 1, la structure support 3 est recouverte par un matériau de recouvrement 12, formé par exemple d'une association de tuiles de type canal.

En particulier, le long de sa bordure longitudinale supérieure 11, l'installation solaire 1 est bordée par une bordure longitudinale 14 du matériau de recouvrement 12, qui s'étend perpendiculairement au sens de la pente T (cette bordure longitudinale 14 correspond à la bordure d'extrémité du matériau de recouvrement 12 qui se situe en regard de la bordure longitudinale supérieure 11 de l'installation solaire).

Cette bordure longitudinale 14 du matériau de recouvrement 12 s'étend parallèlement à la bordure longitudinale 11 de l'installation solaire 1, et elle est séparée de cette dernière par un espace E, par exemple compris entre 5 et 15 cm.

Sur les figures 1 et 2, on remarque que les plaques 7 qui supportent les panneaux solaires 6 de la rangée supérieure de l'installation se prolongent vers l'amont de la pente, sous la bordure longitudinale supérieure 14 du matériau de recouvrement 12, par une extension 15 dont l'extrémité comporte un retour 16 orienté vers le haut. Toujours sur ces figures 1 et 2, on remarque que la bordure d'extrémité supérieure 17 de ce retour 16 est découpée pour suivre approximativement le contour de la face inférieure 12' des tuiles 12.

D'une manière générale, le niveau supérieur du matériau de recouvrement 12 s'étend dans un plan P' qui est sus-jacent par rapport au plan P précité correspondant au niveau supérieur de la juxtaposition de panneaux solaires 6 ; de la sorte, les panneaux solaires 6 de l'installation 1 se trouvent intégrés dans l'épaisseur de la toiture.

Conformément à l'invention, en particulier pour éviter les infiltrations d'eaux pluviales sous la bordure longitudinale 14 des tuiles 12 (entre la face inférieure 12' des tuiles 12 et la bordure supérieure 17 du retour 16), du fait de rafales de vent contraire au sens de la pente T, il est prévu un volet déflecteur 18 (muni d'une aile déflectrice 18'), rapporté et placé dans l'espace E précité délimité par ladite bordure longitudinale supérieure 11 des panneaux solaires 6, et ladite bordure longitudinale 14 en regard du matériau de recouvrement 12. L'aile déflectrice 18' du volet déflecteur 18 s'étend dans l'encombrement de l'espace E, au-delà du chant d'extrémité du profilé amont 10a de la structure d'encadrement des panneaux solaires 6, en direction de la bordure longitudinale 14 des tuiles 12.

Dans le mode de réalisation illustré, l'aile déflectrice 18' de ce volet déflecteur 18 s'étend à partir de la bordure longitudinale supérieure 11 des panneaux solaires 6, parallèlement à cette bordure longitudinale 11 et vers le haut. Plus précisément, elle démarre au moins à partir du plan P des panneaux solaires 6 (et même ici en-dessous) et elle s'étend pratiquement jusqu'au plan P' du matériau de recouvrement 12, de manière à être complètement intégrée dans l'encombrement en épaisseur de la toiture.

A noter que dans une variante de réalisation, cette aile déflectrice 18' peut s'étendre au-dessus du plan P', en particulier en fonction des besoins ou des nécessités techniques.

En outre, comme on peut le voir sur les figures 1 et 2, l'aile déflectrice 18' de ce volet déflecteur 18 s'étend de manière inclinée, du bas vers le haut, en direction de l'amont de la pente, ceci par rapport à un plan perpendiculaire auxdits plans P et P', l'angle d'inclinaison correspondant a étant compris entre 30 et 60° par rapport à cette perpendiculaire du plan P (cet angle a est avantageusement de l'ordre de 45°).

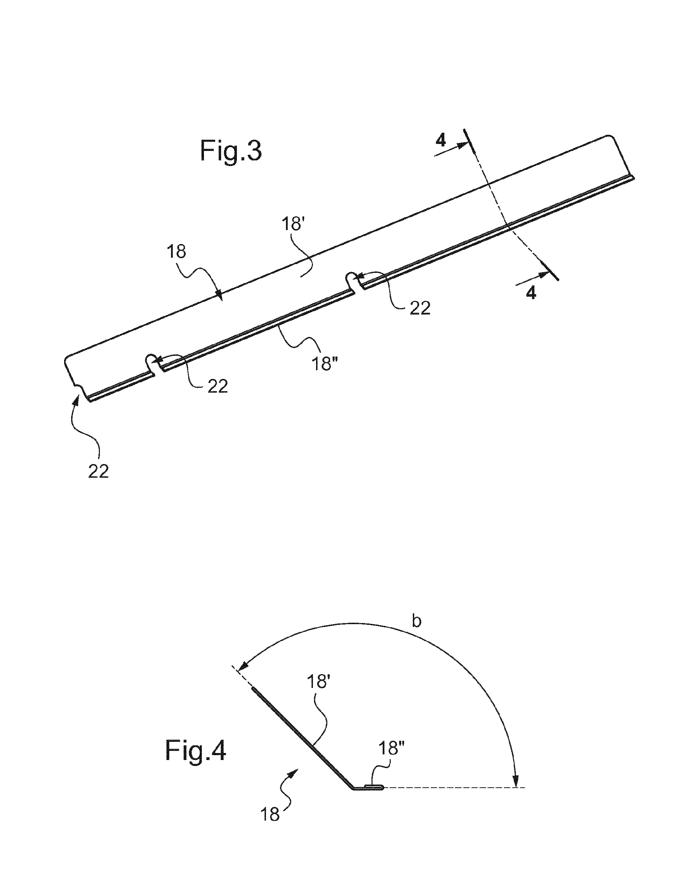

Ce volet déflecteur 18, illustré isolément sur les figures 3 et 4 est en forme générale de dièdre comportant l'aile déflectrice 18' précitée, associée à une aile embase 18" formant, entre elles, un angle b compris entre 120 et 150° (de préférence voisin de 135°).

Ce volet déflecteur 18 peut être réalisé par découpage/pliage d'une tôle d'acier galvanisé.

L'aile embase 18" sert à la fixation du volet déflecteur 18, en l'occurrence sur le profilé amont 10a des panneaux solaires 6 de la rangée supérieure de l'installation 1.

Plus particulièrement, le profilé amont 10a de chaque panneau solaire 6 comporte une gorge 20 ménagée dans son chant et ouverte extérieurement (en direction de l'amont de la pente). Et cette gorge 20 permet la réception de l'aile embase 18", puis sa fixation au moyen de vis 21, par exemple du type autoforantes, engagées et fixées par le dessous dudit profilé 10a, comme visible sur la figure 2.

De préférence, chaque panneau solaire 6 de la rangée supérieure de l'installation comporte son propre volet déflecteur 18 (ou plus précisément son propre tronçon de volet déflecteur) fixé avant son montage sur la plaque support 7 (par exemple en usine).

Chaque tronçon de volet déflecteur 18 s'étend alors sur toute ou pratiquement toute la longueur du panneau solaire 6 équipé.

Comme on peut le voir sur les figures 1 et 3, le volet déflecteur 18 comporte des ouvertures traversantes 22 qui permettent l'accès à des matériels sous-jacents, par exemple des vis de fixation ou de manoeuvre pour un boîtier passe-câbles, un plot de masse ou un système de verrouillage en position des panneaux solaires 6 sur leur plaque support 7.

Ici, deux ouvertures 22 sont ménagées entre les deux extrémités de chaque tronçon de volet déflecteur, et une ouverture complémentaire 22 est ménagée au niveau de l'une de ses extrémités.

Ces ouvertures 22 sont ménagées au moins en partie dans l'aile déflectrice 18'. Ici elles débouchent dans la bordure d'extrémité libre de l'aile embase 18", et elles s'étendent sur toute la largeur de l'aile embase 18" et sur une partie de l'aile déflectrice 18'.

Dans une variante de réalisation, le volet déflecteur 18, ou ses différents tronçons constitutifs juxtaposés, peuvent être fixés directement sur la face supérieure de la plaque support 7, dans l'espace E précité, situé entre la bordure longitudinale supérieure 11 des panneaux solaires 6 et la bordure longitudinale 14 du matériau de recouvrement 12, et ceci par tout moyen approprié. Par exemple, l'aile embase 18" peut être fixée sur l'extension 15 des plaques 7 au moyen de vis venant se fixer sur des plots soudés.

La présence du volet déflecteur 18 positionné en amont de la bordure longitudinale 11 des panneaux solaires 6, et en aval de la bordure longitudinale en regard 14 du matériau de recouvrement 12, et qui s'étend de manière inclinée et vers le haut, au-dessus du plan P, permet aux eaux pluviales propulsées par les rafales de vent contraire à la pente T, de passer au-dessus du plan P'.

Un tel volet déflecteur 18 permet donc de limiter sensiblement les possibilités d'infiltrations d'eaux entre le matériau de recouvrement 12 et le retour 16 des plaques supports 7, au niveau de la bordure longitudinale 14 du matériau de recouvrement. II s'avère particulièrement intéressant pour des matériaux de recouvrement 12 à forte onde, comme des tuiles de type canal par exemple.

## Revendications

1. Installation solaire destinée à être posée sur une partie de la surface d'une structure support en pente (3), laquelle installation (1) comprend une juxtaposition de panneaux solaires (6) dont le niveau supérieur s'étend dans un plan général (P), et qui est délimitée notamment par une bordure longitudinale supérieure (11) s'étendant perpendiculairement au sens de la pente (T), laquelle installation (1) est destinée à être bordée, au moins le long de ladite bordure longitudinale supérieure (11), par un matériau (12) de recouvrement de ladite structure support en pente (3), délimité par une bordure longitudinale (14) parallèle ou sensiblement parallèle à ladite bordure longitudinale supérieure (11) de ladite juxtaposition de panneaux solaires (6), le niveau supérieur dudit matériau de recouvrement (12) s'étendant dans un plan général (P') qui est sus-jacent par rapport audit plan (P) desdits panneaux solaires (6), et un espace (E) étant prévu entre ladite bordure longitudinale supérieure (11) desdits panneaux solaires (6) et ladite bordure longitudinale en regard (14) dudit matériau de recouvrement (12), **caractérisée en ce qu'**elle comprend un volet déflecteur (18) ménagé entre ladite bordure longitudinale supérieure (11) desdits panneaux solaires (6) et ladite bordure longitudinale en regard (14) dudit matériau de recouvrement (12), lequel volet déflecteur (18) comprend une aile déflectrice (18') qui s'étend, d'une part parallèlement ou sensiblement parallèlement auxdites bordures longitudinales (11, 14), et d'autre part vers le haut, depuis ledit plan (P) du niveau supérieur de la juxtaposition de panneaux solaires (6), ou en-dessous, et au-delà dudit plan (P).

2. Installation solaire selon la revendication 1, **caractérisée en ce que** ladite aile déflectrice (18') s'étend au maximum jusqu'audit plan (P') du niveau supérieur du matériau de recouvrement (12).

3. Installation solaire selon l'une quelconque des revendications 1 ou 2, **caractérisé en ce que** ladite aile déflectrice (18') s'étend de manière inclinée, du bas vers le haut, en direction de l'amont de la pente, ceci par rapport à un plan perpendiculaire audit plan (P) du niveau supérieur de la juxtaposition de panneaux solaires (6).

4. Installation solaire selon la revendication 3, **caractérisée en ce que** ladite aile déflectrice (18') s'étend de manière inclinée selon un angle (a) compris entre 30 et 60° par rapport à la perpendiculaire audit plan (P) du niveau supérieur de la juxtaposition de panneaux solaires (6).

5. Installation solaire selon l'une quelconque des revendications 1 à 4, **caractérisée en ce que** ledit volet déflecteur (18) est en forme de dièdre comprenant ladite aile déflectrice (18'), associée à une aile embase (18") permettant sa fixation sur un support (10a), par exemple au moyen de vis (21).

6. Installation solaire selon l'une quelconque des revendications 1 à 5, **caractérisée en ce que** lesdits panneaux solaires (6) de la rangée supérieure sont chacun fixés sur une plaque support (7) munie de moyens (9) pour sa solidarisation avec ladite structure support en pente (3), et **en ce que** ledit volet déflecteur (18) est fixé sur ladite plaque support (7).

7. Installation solaire selon l'une quelconque des revendications 1 à 5, **caractérisée en ce que** lesdits panneaux solaires (6) de la rangée supérieure sont chacun bordés par un cadre périphérique constitué d'un profilé aval, de deux profilés latéraux (10b), et d'un profilé amont (10a) constituant une partie au moins de ladite bordure longitudinale supérieure (11), et **en ce que** ledit volet déflecteur (18) est fixé sur ledit profilé amont (10a).

8. Installation solaire selon les revendications 5 et 7 prises en combinaison, **caractérisé en ce que** ledit profilé amont (10a) comporte une gorge longitudinale (20) dans laquelle est encastrée au moins une partie de l'aile embase (18") du volet déflecteur (18), laquelle aile embase (18") est fixée dans ladite gorge (20) au moyen de vis (21).

9. Installation solaire selon la revendication 8, **caractérisée en ce que** le volet déflecteur (18) comporte une ou plusieurs ouvertures (22) ménagées au moins en partie dans son aile déflectrice (18'), permettant d'accéder à des matériels sous-jacents, par exemple des vis de fixation ou de manoeuvre pour lesdits matériels.

10. Installation solaire selon l'une quelconque des revendications 1 à 9, **caractérisée en ce que** sa bordure longitudinale supérieure (11) est constituée par la juxtaposition d'une pluralité de panneaux solaires (6), chacun desdits panneaux solaires (6) étant équipé de son propre volet déflecteur (18) qui s'étend sur toute ou pratiquement toute sa longueur.
